# EUROPÄISCHE PATENTSCHRIFT

(11) **EP 4 060 122 B1**
(45) Veröffentlichungstag und Bekanntmachung des Hinweises auf die Patenterteilung: **13.09.2023**
(21) Anmeldenummer: 21163394.6
(22) Anmeldetag: 18.03.2021
(51) Int. Cl.: E02D 3/12, C09K 17/12, E02D 17/02

(54) **ANLAGE UND VERFAHREN ZUM HERSTELLEN EINER INJEKTIONSSILIKATGELLÖSUNG ZUM INJIZIEREN IN EINEN BODEN**
INSTALLATION AND METHOD FOR PRODUCING AN INJECTION SILICATE GEL SOLUTION FOR INJECTING INTO A BASE
SYSTÈME ET PROCÉDÉ DE PRÉPARATION D'UNE SOLUTION DE GEL DE SILICATE D'INJECTION DESTINÉE À L'INJECTION DANS UN SOL

(43) Veröffentlichungstag der Anmeldung: 21.09.2022
(73) Patentinhaber: BAUER Spezialtiefbau GmbH, 86529 Schrobenhausen (DE)
(72) Erfinder: BEIER, Dirk, 09119 Chemnitz (DE); BECKHAUS, Karsten, 80801 München (DE); LIERSCH, Lars, 86529 Schrobenhausen (DE); WENZL, Patrik, 86391 Stadtbergen (DE)
(74) Vertreter: Wunderlich & Heim Patentanwälte Partnerschaftsgesellschaft mbB

(56) Entgegenhaltungen:
- WO-A1-2019/121873
- DE-A1- 10 218 771
- JP-A- H1 036 840

## Beschreibung

Die Erfindung betrifft eine Anlage zum Herstellen einer Injektions-Silikatgellösung zum Injizieren in einen Boden gemäß dem Anspruch 1.

Weiterhin betrifft die Erfindung ein Verfahren zum Herstellen einer Injektions-Silikatgellösung gemäß dem Anspruch 7.

Bei Baugruben, deren Sohlen unterhalb eines Grundwasserspiegels liegen, ist im Allgemeinen eine Baugrubenumschließung erforderlich. Die Baugrubenumschließung soll einen Eintritt von Grundwasser in die Baugrube verhindern. Zum Herstellen der Baugrubenumschließung wird eine vertikale dichte Umfassungswand bis zu einer wassersperrenden Bodenschicht im Boden erstellt. Für den Fall, dass keine natürliche, horizontal verlaufende, wassersperrende Bodenschicht vorhanden ist, muss für die Baugrubenumschließung eine im Wesentlichen horizontal verlaufende Dichtsohle erstellt werden. Zum Herstellen einer solchen Dichtsohle ist es aus der DE 102 18 771 A1 bekannt, ein Weichgel in den Boden zu injizieren. Dabei kann das Weichgel zum Zeitpunkt der Injektion noch eine geringe Viskosität aufweisen und fließfähig oder flüssig sein. In diesem Verfahren wird der Einsatz eines flüssigen Kieselsols ohne jegliche Verwendung von Wasserglas als Injektionsmedium angeregt.

Durch das Einpumpen des Injektionsmediums wird um eine Injektionsstelle ein kugel- oder scheibenförmiger Injektionskörper erzeugt, bei dem Flüssigkeit zwischen festen Bodenpartikeln durch das Injektionsmedium verdrängt wird. Durch die vorhandene oder sich ausbildende gelartige Struktur des Injektionsmediums hat der so gebildete Injektionskörper eine wassersperrende dichtende Eigenschaft. Durch eine Aneinanderreihung einer Vielzahl derartiger Injektionskörper kann in einer Bodenschicht eine wassersperrende Schicht und damit eine Dichtsohle ausgebildet werden.

Aus der EP 2 787 123 B1 ist es bekannt, zum Herstellen einer Injektions-Weichgellösung Leitungswasser als Anmachwasser zu verwenden, welchem ein Komplexbildner zugesetzt wird. Durch den Komplexbildner werden Metallionen in dem Anmachwasser gebunden, so dass beim Mischen mit einem Dichtgrundstoff verbesserte Eigenschaften des Injektions-Weichgels hinsichtlich Viskosität und Fließeigenschaften erzielt werden können. Als Dichtgrundstoff kann Kieselsol oder Wasserglas zum Vermischen mit dem Anmachwasser verwendet werden.

Aus der WO 2019/121873 A1 ist eine andere Injektionslösung bekannt, die ebenfalls auf den Einsatz von Wasserglas verzichtet. Durch das hier vorgeschlagene Verfahren kann auf eine aktive Mischvorrichtung zur Mischung der Einzelkomponenten verzichtet werden, da die Verwendung von Kohlendioxid, als gasförmiges Reaktiv, automatisch zu einer gleichmäßigen Durchmischung der Komponenten führt.

Schließlich offenbart die JP H10-036840 A, Hinweise auf die Zusammensetzung einer möglichen Injektionslösung. Dieser Stand der Technik enthält allerdings keinerlei Hinweise, wie eine Mischung der Komponenten erfolgen könnte.

Der Erfindung liegt die **Aufgabe** zugrunde, eine Anlage und ein Verfahren zum Herstellen einer Injektions-Silikatgellösung anzugeben, mit welchen in besonders effizienter Weise eine Injektions-Silikatgellösung mit guten Injektionseigenschaften hergestellt werden kann.

Die Aufgabe wird zum einen durch eine Anlage mit den Merkmalen des Anspruchs 1 und zum anderen durch ein Verfahren mit den Merkmalen des Anspruchs 7 gelöst. Bevorzugte Ausführungsformen der Erfindung sind in den jeweils abhängigen Ansprüchen angegeben.

Gemäß der Erfindung ist eine Anlage zum Herstellen einer Injektions-Silikatgellösung zum Injizieren in einen Boden vorgesehen, mit einer Filtervorrichtung, welche von einem Anmachwasser zur Vorbehandlung durchströmbar ist, wobei die Filtervorrichtung mindestens ein Filterelement für einen Ionenaustausch, insbesondere einen Harzfilter, aufweist, einer Zumischvorrichtung zum dosierten Zumischen eines Härters, insbesondere eines Hydrogencarbonat-Pulvers, einer Zuführvorrichtung zum Zuführen von flüssigem Kieselsol in das vorbehandelte Anmachwasser, eine Zuführvorrichtung zum Zuführen von flüssigem Wasserglas in das vorbehandelte Anmachwasser und einer Mischvorrichtung zum Vermischen und Homogenisieren der zugeführten Komponenten mit dem vorbehandelten Anmachwasser zum Bilden einer Injektions-Silikatgellösung.

Ein erster Aspekt der Erfindung liegt dabei darin, das Anmachwasser durch ein Hindurchleiten durch eine Filtervorrichtung vorzubehandeln. Dabei weist die Filtervorrichtung mindestens ein Filterelement für einen Ionenaustausch auf. Hierdurch kann die Notwendigkeit entfallen, dem Anmachwasser einen chemischen Stoff, wie einen Komplexbildner, zuzuführen. Metallionen in dem Anmachwasser können sich unmittelbar etwa an einem Ionenaustauschharz anlagern und dort festgehalten werden. Diese Vorbehandlung des Anmachwassers ist effizient und kostengünstig.

Ein weiterer Aspekt der Erfindung besteht darin, dass dem so vorbehandelten Anmachwasser anschließend ein Härter, z.B. Hydrogen-Carbonat, in pulverförmiger Form, sowie Kieselsol und Wasserglas im flüssigen Zustand zudosiert werden. Hierdurch kann erreicht werden, dass sich eine besonders gute Mischung mit Lösung des Härters, z.B. pulverförmigen Hydrogen-Carbonats, ohne übermäßige Einbringung von Mischenergie ergibt. Dies ist energieeffizient und unterstützt eine kontrollierte Gelbildung. Dies ermöglicht eine besonders gute Dosierbarkeit und Injizierbarkeit der Silikatgellösung Anschließend kann die so hergestellte Silikatgellösung in den Boden injiziert werden. Dabei kann die Silikatgellösung bereits beim Injizieren eine gewisse gelartige Struktur aufweisen oder diese erst bei Injektion in die Bodenschicht ausbilden. Es findet dann eine Gelbildung statt, welche die Abdichtung erzeugt. Dies bildet dann zusammen mit dem Boden einen Silikatgelkörper.

Eine bevorzugte Weiterbildung der erfindungsgemäßen Anlage besteht darin, dass diese leitungsverbunden mit einer Injektionseinrichtung ist, mit welcher die hergestellte Injektions-Silikatgellösung in den Boden zum Bilden einer Silikatgelsohle injizierbar ist. Die Injektionseinrichtung kann dabei insbesondere eine Pumpeinrichtung sein, welche mit einer Injektionslanze, etwa eines Bohrgerätes, leitungsverbunden ist. Die Injektionslanze kann an einem Bohrgestänge ausgebildet sein, mit welchem das Injektionsmedium in den Boden in eine vorgesehene Bodenschicht mit einem vorgegebenen Druck, welcher vorzugsweise zwischen 3 bar bis 30 bar beträgt, eingebracht wird.

Die Erfindung sieht vor, dass das Filterelement ein Ionenaustauschharz, insbesondere ein Kationenaustauschharz und/oder ein Anionenaustauschharz, umfasst. Hierdurch können sowohl negative als auch positive Metallionen dem Anmachwasser zuverlässig entzogen werden. Insbesondere kann so auch eine gewünschte Wasserhärte des Anmachwassers eingestellt werden. Diese kann vorzugsweise einen Härtegrad unter 3, vorzugsweise 0, betragen oder im Bereich nahe 0 liegen. Hierdurch kann ein besonders gleichmäßiges und definiertes Gelierverhalten der eingestellten Mischung und somit eine besonders gleichmäßige Dichtwirkung des Injektionsgels erzielt werden.

Eine besonders gute Vorbehandlung des Anmachwassers kann nach einer Weiterbildung der Erfindung dadurch erzielt werden, dass die Filtervorrichtung mindestens ein erstes Filterelement mit einem Kationenaustauschharz und mindestens ein zweites Filterelement mit einem Anionenaustauschharz aufweist. Mit der Filtervorrichtung kann auch eine Reinigung des Wassers mit Entfernen von Grobpartikeln und Trübstoffen erfolgen.

Besonders vorteilhaft ist es dabei, dass mehrere erste Filterelemente und mehrere zweite Filterelemente wechselweise in Strömungsrichtung zueinander angeordnet sind. So können besonders zuverlässig verschiedenste Metallionen aus dem Anmachwasser entfernt werden. Selbst bei einer schwankenden Zusammensetzung des Leitungswassers kann so ein Silikatgelmedium in weitgehend gleicher Qualität erreicht werden.

Eine weitere vorteilhafte Ausgestaltung der erfindungsgemäßen Anlage liegt darin, dass die Filtervorrichtung eine Rückspüleinrichtung zur Regeneration des mindestens einen Filterelementes aufweist. Durch eine regelmäßige Rückspülung des Filterelementes oder der einzelnen Filterelemente können die angelagerten Metallionen von dem Austauschharz wieder entfernt und abgespült werden. Dabei wird der Effekt der Umkehrosmose an den Filterelementen angesetzt. Da die Metallionen dem normalen Leitungswasser entzogen sind, können sie ohne Weiteres als normales Abwasser abgeführt oder einer anderen Nutzung zugeführt werden.

Eine weitere vorteilhafte Ausführungsvariante der Erfindung besteht darin, dass die Injektionseinrichtung Teil eines Bohrgerätes ist. Insbesondere kann die Injektionseinrichtung auf einem Bohrgerät oder nahe an einem Bohrgerät zum Erdbohren angeordnet sein, so dass in besonders effizienter Weise ein Weichgel erstellt und unmittelbar verarbeitet werden kann. Dies spart Energie-, Zeit- und Transportkosten bei der Erstellung einer Dichtsohle im Boden für eine Baugrubenumschließung.

Gemäß der Erfindung ist weiter ein Verfahren zum Herstellen einer Injektions-Silikatgellösung mit einer der zuvor beschriebenen Anlagen vorgesehen, wobei Anmachwasser durch eine Filtervorrichtung mit mindestens einem Filterelement für einen Ionenaustausch durchgeleitet wird, wobei das Anmachwasser vorbehandelt wird, dem vorbehandelten Anmachwasser ein Härter, insbesondere ein Hydrogencarbonat-Pulver, zugemischt wird, anschließend flüssiges Kieselsol und flüssiges Wasserglas dem vorbehandelten Anmachwasser zugeführt werden und das Anmachwasser mit den zugeführten Komponenten vermischt und homogenisiert wird, wobei das Injektions-Silikatgellösung gebildet wird.

Das Verfahren kann insbesondere mit einer der zuvor beschriebenen Anlagen ausgeführt werden. Dabei können die zuvor beschriebenen Vorteile erzielt werden.

Grundsätzlich können die Komponenten Kieselsol und Wasserglas in unterschiedlichen Mischungsverhältnissen zueinander zugeführt werden. Eine hinsichtlich der Gelbildung und der Abdichtwirkung besonders vorteilhafte Ausführungsform der Erfindung ergibt sich dadurch, dass das Kieselsol und das Wasserglas in einem Verhältnis von 1 : 1 zueinander dem Anmachwasser zugeführt werden.

Eine Verbesserung der genannten Eigenschaften des Weichgelmediums wird insbesondere dadurch erzielt, dass der Härter, insbesondere Hydrogencarbonat-Pulver, in einem Verhältnis von 0,5 : 1 zu dem Kieselsol beziehungsweise zu dem Wasserglas zugeführt wird. Die angegebenen Verhältniszahlen beziehen sich insbesondere auf Massenangaben zu den genannten Komponenten.

Abhängig von dem lokalen Einsatzort und den pH-Werten im Boden kann die Injektions-Silikatgellösung mit einem gewünschten pH-Wert eingestellt werden. Eine besonders vorteilhafte Verfahrensvariante besteht nach der Erfindung darin, dass die Injektions-Silikatgellösung mit einem im Wesentlichen neutralen pH-Wert zwischen 6 und 10 gebildet wird. Es handelt sich dabei um die typischen pH-Werte, welche in Bodenschichten und dem Grundwasser vorzufinden sind, so dass durch die Injektions-Silikatgellösung keine oder keine übermäßige Beeinflussung des natürlichen pH-Wertebereichs erfolgt.

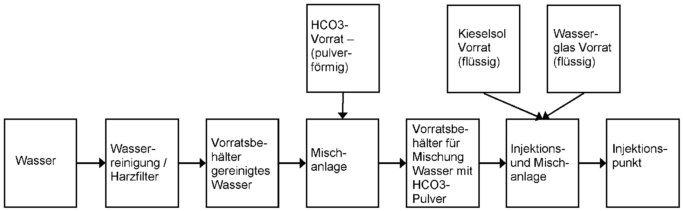

Die Funktionsweise einer erfindungsgemäßen Anlage sowie des erfindungsgemäßen Verfahrens werden nachfolgend mit Bezug auf die beiliegende Zeichnung erläutert, die ein schematisches Ablaufdiagramm darstellt.

Zum Herstellen der Injektions-Silikatgellösung wird Anmachwasser, welches vorzugsweise Leitungswasser oder Grundwasser ist, einer Filtervorrichtung zur Wasserreinigung und Vorbehandlung zugeleitet. Die Filtervorrichtung kann dabei mindestens ein Filterelement mit einem Ionenaustauschharz aufweisen. Das Filterelement kann auch als Harzfilter bezeichnet werden. Das so vorbehandelte Anmachwasser kann unmittelbar einer Mischanlage oder vorzugsweise einem Vorratsbehälter für eine spätere Weiterverarbeitung zugeleitet werden. In der Filtervorrichtung kann auch eine mechanische Reinigung etwa durch Abfiltern von Trübstoffen erfolgen.

In einer ersten Mischanlage, welche mit mechanischen Rührelementen versehen ist, kann einer vorbestimmten Menge an vorbehandeltem Anmachwasser pulverförmiges Hydrogencarbonat, etwa Natriumhydrogencarbonat, zugeführt werden, wobei eine Vormischung in der Mischanlage erstellt wird. Diese Vormischung kann vorzugsweise in einem Vorratsbehälter für eine Weiterverarbeitung oder direkt zu einer weiteren Injektions- und Mischanlage zugeführt werden, in welcher flüssiges Kieselsol und flüssiges Wasserglas zur Fertigstellung der Injektions-Silikatlösung zudosiert werden. Dies kann in einer zweiten Mischanlage oder mit der ersten Mischanlage durchgeführt werden. Vorzugsweise unmittelbar nach der Zudosierung und der Vermischung wird das so hergestellte Weichgelmedium einer Injektionseinrichtung zugeführt, mit welcher es an einem Injektionspunkt in einen Boden zu einer gewünschten Bodenschicht geleitet wird, um dort eine Dichtsohle auszubilden.

## Patentansprüche

1. Anlage zum Herstellen einer Injektions-Silikatgellösung zum Injizieren in einen Boden mit
- einer durchströmbaren Vorrichtung, welche von einem Anmachwasser zur Vorbehandlung durchströmbar ist,
- einer Zumischvorrichtung zum dosierten Zumischen eines Härters, insbesondere einem Hydrogencarbonat-Pulver,
- einer Zuführvorrichtung zum Zuführen von flüssigem Kieselsol in das vorbehandelte Anmachwasser und
- einer Mischvorrichtung zum Vermischen und Homogenisieren der zugeführten Komponenten mit dem vorbehandelten Anmachwasser zum Bilden einer Silikatgellösung,
**dadurch gekennzeichnet, dass** die durchströmbare Vorrichtung eine Filtervorrichtung ist und mindestens ein Filterelement für einen Ionenaustausch, insbesondere einen Harzfilter, aufweist und das Filterelement ein Ionenaustauschharz, insbesondere ein Kationenaustauschharz und / oder ein Anionenaustauschharz, umfasst, wobei eine Zuführvorrichtung zum Zuführen von flüssigem Wasserglas in das vorbehandelte Anmachwasser vorgesehen ist.

2. Anlage nach Anspruch 1,
**dadurch gekennzeichnet,**
**dass** die Filtervorrichtung mindestens ein erstes Filterelement mit einem Kationenaustauschharz und mindestens ein zweites Filterelement mit einem Anionenaustauschharz aufweist.

3. Anlage nach Anspruch 1 oder 2,
**dadurch gekennzeichnet,**
**dass** die Anlage zum Herstellen einer Injektions-Silikatgellösung leitungsverbindbar mit einer Injektionseinrichtung ist, mit welcher die hergestellte Injektions-Silikatgellösung in den Boden zum Bilden einer Silikatgelsohle injizierbar ist.

4. Anlage nach Anspruch 2,
**dadurch gekennzeichnet,**
**dass** mehrere erste Filterelemente und mehrere zweite Filterelemente wechselweise in Strömungsrichtung zueinander angeordnet sind.

5. Anlage nach einem der Ansprüche 1 bis 4,
**dadurch gekennzeichnet,**
**dass** die Filtervorrichtung eine Rückspüleinrichtung zur Regeneration des mindestens einen Filterelementes aufweist.

6. Anlage nach einem der Ansprüche 1 bis 5,
**dadurch gekennzeichnet,**
**dass** die Injektionseinrichtung auf oder nahe an einem Bohrgerät angeordnet ist.

7. Verfahren zum Herstellen einer Injektions-Silikatgellösung mit einer Anlage nach einem der Ansprüche 1 bis 6, wobei
- Anmachwasser durch eine Filtervorrichtung mit mindestens einem Filterelement für einen Ionenaustausch, insbesondere einen Harzfilter, durchgeleitet wird, wobei das Anmachwasser vorbehandelt wird,
- dem vorbehandelten Anmachwasser ein Härter, insbesondere ein Hydrogencarbonat-Pulver, zugemischt wird,
- anschließend flüssiges Kieselsol und flüssiges Wasserglas dem vorbehandelten Anmachwasser zugeführt werden und
- das Anmachwasser mit den zugeführten Komponenten vermischt und homogenisiert wird, wobei die Injektions-Silikatgellösung gebildet wird,
und wobei das Filterelement ein Ionenaustauschharz, insbesondere ein Kationenaustauschharz und/oder ein Anionenaustauschharz, umfasst.

8. Verfahren nach Anspruch 7,
**dadurch gekennzeichnet,**
**dass** das Kieselsol und das Wasserglas in einem Verhältnis von 1:1 zueinander dem Anmachwasser zugeführt werden.

9. Verfahren nach Anspruch 7 oder 8,
**dadurch gekennzeichnet,**
**dass** der Härter, insbesondere das Hydrogencarbonat-Pulver, in einem Verhältnis von 0,5:1 zu dem Kieselsol beziehungsweise zu dem Wasserglas zugeführt wird.

10. Verfahren nach einem der Ansprüche 7 oder 9,
**dadurch gekennzeichnet,**
**dass** die Injektions-Silikatgellösung mit einem im Wesentlichen neutralen pH-Wert zwischen 6 und 10 gebildet wird.

## Claims

1. System for producing an injection silicate gel solution for injection into a soil with
- a permeabledevice through which a mixing water can flow for pretreatment,
- an admixing device for metered admixing of a curing agent, in particular a hydrogen carbonate powder,
- a feeding device for feeding liquid silica sol into the pretreated mixing water, and
- a mixing device for mixing and homogenizing the fed components with the pretreated mixing water for forming a silicate gel solution
**characterized in that**
the permeable device is a filtering device and has at least one filter element for ion exchange, in particular a resin filter, and the filter element comprises an ion exchange resin, in particular a cation exchange resin and/or an anion exchange resin,
wherein a feeding device for feeding liquid sodium silicate into the pretreated mixing water is provided.

2. System according to claim 1,
**characterized in that**
the filtering device comprises at least one first filter element with a cation exchange resin and at least one second filter element with an anion exchange resin.

3. System according to claim 1 or 2,
**characterized in that**
the system for producing an injection silicate gel solution is line-connectable to an injection device by means of which the produced injection silicate gel solution can be injected into the soil for forming a silicate gel floor.

4. System according to claim 2,
**characterized in that**
a plurality of first filter elements and a plurality of second filter elements are arranged alternately to one another in the direction of flow.

5. System according to any one of claims 1 to 4,
**characterized in that**
the filtering device comprises a backwashing device for regenerating the at least one filter element.

6. System according to any one of claims 1 to 5,
**characterized in that**
the injection device is arranged on or close to a drilling rig.

7. Method for producing an injection-silicate gel solution, with a system according to any one of claims 1 to 6, wherein
- mixing water is passed through a filtering device having at least one filter element for ion exchange, in particular a resin filter, wherein the mixing water is pretreated,
- a curing agent, in particular a hydrogen carbonate powder, is admixed to the pretreated mixing water,
- subsequently, liquid silica sol and liquid sodium silicate are fed to the pretreated mixing water, and
- the mixing water is mixed with the fed components and homogenized, wherein the injection-silicate gel solution is formed,
and wherein the filter element comprises an ion exchange resin, in particular a cation exchange resin and/or an anion exchange resin.

8. Method according to claim 7,
**characterized in that**
the silica sol and the sodium silicate are fed into the mixing water in a ratio of 1:1 to each other.

9. Method according to claim 7 or 8,
**characterized in that**
the curing agent, in particular the hydrogen carbonate powder, is fed into the silica sol or respectively into the sodium silicate in a ratio of 0.5:1.

10. Method according to any one of claims 7 or 9,
**characterized in that**
the injection silicate gel solution is formed with a substantially neutral pH value between 6 and 10.

## Revendications

1. Installation de fabrication d'une solution de gel de silicate d'injection destiné à être injectée dans un sol, avec
- un dispositif pouvant être traversé, lequel peut être traversé par une eau de gâchage pour prétraitement,
- un dispositif de mélange destiné à mélanger de manière dosée un durcisseur, en particulier une poudre d'hydrogénocarbonate,
- un dispositif d' amenée destiné à amener un sol de silice liquide dans l'eau de gâchage prétraitée, et
- un dispositif de mélange destiné à mélanger et à homogénéiser les composants amenés à l'eau de gâchage prétraitée pour former une solution de gel de silicate, **caractérisé en ce que** le dispositif pouvant être traversé est un dispositif de filtration et présente au moins un élément de filtration pour un échange d'ions, en particulier un filtre de résine, et l'élément de filtration comprend une résine échangeuse d'ions, en particulier une résine échangeuse de cations et/ou une résine échangeuse d'anions, dans lequel un dispositif d'amenée est prévu pour amener du verre soluble liquide dans l'eau de gâche prétraitée.

2. Installation selon la revendication 1,
**caractérisée en ce**
**que** le dispositif de filtration présente au moins un premier élément de filtration avec une résine échangeuse de cations et au moins un deuxième élément de filtration avec une résine échangeuse d'anions.

3. Installation selon la revendication 1 ou 2,
**caractérisée en ce**
**que**, pour fabriquer une solution de gel de silicate d'injection, l'installation peut être reliée par une conduite à un système d'injection, avec lequel la solution de gel de silicate fabriquée peut être injectée dans le sol pour former une semelle de gel de silicate.

4. Installation selon la revendication 2,
**caractérisée en ce**
**que** plusieurs premiers éléments de filtration et plusieurs deuxièmes éléments de filtration sont disposés tour à tour dans la direction d'écoulement les uns par rapport aux autres.

5. Installation selon l'une quelconque des revendications 1 à 4,
**caractérisée en ce**
**que** le dispositif de filtration présente un système de rinçage à contre-courant pour régénérer l'au moins un élément de filtration.

6. Installation selon l'une quelconque des revendications 1 à 5,
**caractérisée en ce**
**que** le système d'injection est disposé sur ou à proximité d'un appareil de forage.

7. Procédé de fabrication d'une solution de gel de silicate d'injection avec une installation selon l'une quelconque des revendications 1 à 6, dans lequel
- de l'eau de gâchage est acheminée à travers un dispositif de filtration avec au moins un élément de filtration pour un échange d'ions, en particulier un filtre de résine, dans lequel l'eau de gâchage est prétraitée,
- un durcisseur, en particulier de la poudre d'hydrogénocarbonate, est ajouté à l'eau de gâchage prétraitée,
- puis du sol de silice liquide et du verre soluble liquide sont amenés à l'eau de gâchage prétraitée, et
- l'eau de gâchage est mélangée et homogénéisée avec les composants amenés, dans lequel la solution de gel de silicate d'injection est formée,
et dans lequel l'élément de filtration comprend une résine échangeuse d'ions, en particulier une résine échangeuse de cations et/ou une résine échangeuse d'anions.

8. Procédé selon la revendication 7,
**caractérisé en ce**
**que** le sol de silice et l'eau soluble sont amenés à l'eau de mélange selon un rapport de 1:1 l'un par rapport à l'autre.

9. Procédé selon la revendication 7 ou 8,
**caractérisé en ce**
**que** le durcisseur, en particulier la poudre d'hydrogénocarbonate, est amené au sol de silice ou au verre soluble selon un rapport de 0,5:1.

10. Procédé selon l'une quelconque des revendications 7 ou 9,
**caractérisé en ce**
**que** la solution de gel de silicate d'injection est formée avec une valeur de pH sensiblement neutre entre 6 et 10.
